# EUROPEAN PATENT SPECIFICATION

(11) **EP 3 032 810 B1**
(45) Date of publication and mention of the grant of the patent: **06.06.2018**
(21) Application number: 14785809.6
(22) Date of filing: 04.04.2014
(51) Int. Cl.: H04M 3/537, H04M 3/42

(54) **METHOD AND SYSTEM FOR NOTIFYING VOICE MAILBOX, AND COMPUTER STORAGE MEDIUM**
VERFAHREN UND SYSTEM ZUR BENACHRICHTIGUNG EINER SPRACHBOX UND COMPUTERSPEICHERMEDIUM
PROCÉDÉ ET SYSTÈME DE NOTIFICATION DE BOÎTE VOCALE, ET SUPPORT DE STOCKAGE INFORMATIQUE

(30) Priority: 08.08.2013 CN 201310343752
(43) Date of publication of application: 15.06.2016
(73) Proprietor: ZTE Corporation, Shenzhen, Guangdong 518057 (CN)
(72) Inventor: HONG, Liang, Shenzhen Guangdong 518057 (CN)
(74) Representative: Lavoix
(86) International application number: PCT/CN2014/074866
(87) International publication number: WO 2014/169767

(56) References cited:
- CN-A- 1 791 130
- CN-A- 101 925 032
- JP-A- 2008 123 211
- US-B1- 7 035 382

## Description

### TECHNICAL FIELD

The present disclosure relates to a voice mailbox technology in the field of mobile communications, and more particularly, to a voice mailbox notification method and system, and a computer storage medium.

### BACKGROUND

In the related art, a voice mailbox system is a telecom value-added service widely used all over the world. A main function of the voice mailbox system is to store a message of a calling party for a user when the user cannot be connected. After the message is left, a basic function of a voice mailbox is to notify a mailbox user of a new mail, and needs to transfer a new message for the user to the user in time. Thus, the user can access the system in time to extract the message.

A mode of notifying the user of the new mail mainly includes outcall notification and Short Message Service (SMS) notification. A traditional new mail notification mode of the voice mailbox has the disadvantages as follows.
1: in two notification modes, the user is notified frequently and repeatedly. On one hand, the user is disturbed, and user experiences are affected. On the other hand, telecom resources are wasted for an operator.
2: the traditional outcall notification adopts a timing calling mode which is low in connection rate. Moreover, the user is more likely called at an inopportune time, for example, at night, and the user experiences are more likely affected.
3: the traditional SMS notification is limited due to a notification form. The notification success rate of the traditional SMS notification is lower than that of the outcall notification. Certain important information of the user is more likely delayed, and the usage of the user is affected.

According to US 7 035 382 B1, a voice mailbox management method in a voice mail system through a mutual notification function, between a user mobile telecommunications terminal and a voice mail server, using an extended short message service is provided. According to the voice mailbox management method, when a state change occurs in the voice mailbox of the voice mail server and the voice mailbox of the user mobile telecommunications terminal, a short message indicating the state change is sent to each other, and according to the received short message, the state of the voice mailbox in the voice mail server or the user mobile telecommunications terminal is modified, which enables to keep coherence in identical information in both voice mailboxes of the voice mail server and the user mobile telecommunications terminal.

### SUMMARY

Embodiments of the present disclosure provide a voice mailbox notification method and system, and a computer storage medium, which are capable of avoiding the problems that the telecom resources are wasted and the user is disturbed due to repeated notifications, thereby improving the timeliness and success rate of mail notifications as well as the user experiences.

The features of the method and device according to the present disclosure are defined in the independent claims, and the preferable features according to the present invention are defined in the dependent claims.

By means of the technical solutions provided by the embodiments of the present disclosure, wasting of the telecom resources and disturbance of the user caused by repeated notifications are effectively avoided, an appropriate notification policy can be intelligently adopted according to different message activating scenarios, the timeliness and success rate of mail notifications are greatly improved, and the user experiences of a service system are improved.

### BRIEF DESCRIPTION OF THE DRAWINGS

Fig. 1 is a flowchart 1 of a voice mailbox notification method according to an embodiment of the present disclosure;
Fig. 2 is a flowchart 2 of a voice mailbox notification method according to an embodiment of the present disclosure;
Fig. 3 is a structural diagram 1 of a voice mailbox notification system according to an embodiment of the present disclosure; and
Fig. 4 is a structural diagram 2 of a voice mailbox notification system according to an embodiment of the present disclosure.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

Embodiments of the present disclosure provide a voice mailbox notification method and system. A user terminal is notified in different modes according to a call forwarding activating scenario for a message event, so that the success rate of a new mail notification is higher, and the new mail notification is timelier. Activating conditions of the message event include that the user terminal does not answer, the user terminal is powered off, the user terminal is not in a service area, and the user terminal is busy. According to the embodiments of the present disclosure, the activating conditions are distinguished as follows: if the activating condition, referring to that the user terminal is inaccessible, includes that the user terminal is powered off and the user terminal is not in the service area, an outcall notification is initiated after the user terminal is powered on or returns to the service area; if the activating condition is BUSY, namely the user terminal is in a call, the outcall notification is initiated after the user terminal is hung up; and if the activating condition refers to that the user terminal does not answer, only a Short Message Service (SMS) notification is issued. Compared with a traditional voice mailbox, the present disclosure has the advantages that the disturbance on a user caused by most invalid notification calls and new mail notifications is effectively avoided, and mail information can be transferred to the user immediately when the user is in an active state, thereby greatly improving the user experiences of a voice mailbox system.

The present disclosure is described below with reference to the drawings and the embodiments in detail. It should understand that the embodiments described herein are only intended to explain the present disclosure without limitations to the present disclosure.

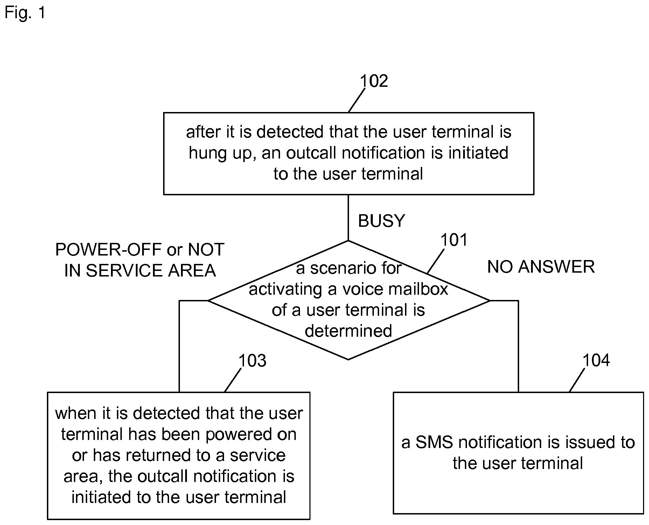

An embodiment of the present disclosure provides a voice mailbox notification method. Fig. 1 is a flowchart of a voice mailbox notification method according to an embodiment of the present disclosure. As shown in Fig. 1, the voice mailbox notification method according to the embodiment of the present disclosure includes the steps as follows.

Step 101: a scenario for activating a voice mailbox of a user terminal is determined.

In step 101, the scenario for activating the voice mailbox of the user terminal can be determined according to a call forwarding cause value for activating the voice mailbox of the user terminal.

Step 102: when it is determined that the scenario is POWER-OFF or NOT IN SERVICE AREA, it is detected whether the user terminal has been powered on or has returned to the service area, and when it is detected that the user terminal has been powered on or has returned to the service area, an outcall notification is initiated to the user terminal.

Preferably, in step 102, the step of detecting whether the user terminal has been powered on or has returned to the service area includes that: a detection short message is issued to the user terminal; and when an issuing success report of the detection short message is received from a Short Message Service Centre (SMSC), it is determined that the user terminal has been powered on or has returned to the service area.

That is, in the embodiment of the present disclosure, a power-on state of a registered user terminal can be detected by using the detection short message. When the user terminal is in a power-off state or not in the service area and a voice mail is generated, the detection short message is issued to the user terminal, which does not have practical contents, cannot be sensed by the user and is only intended to detect whether the user terminal is in an accessible state; when the user terminal is powered on or returns to the service area, the short message will be successfully issued to the user terminal, and when a state report representative of a success in sending of the detection short message is received from the SMSC, it is determined that the user terminal is in the accessible state; and when a state report representative of a failure in sending of the detection short message is received from the SMSC, the terminal state of a user B can be analyzed to be POWER-OFF or NOT IN SERVICE AREA according to error codes in the state report.

Thus, when it is detected that the user terminal is accessible, the outcall notification can be initiated to the user terminal immediately, thereby greatly improving the success rate and timeliness of the outcall notification.

In addition, as one implementation mode of step 102, when it is determined that the scenario is POWER-OFF or NOT IN SERVICE AREA and it is detected that the user terminal is not powered on or does not return to the service area, a SMS notification is issued to the user terminal; and as another implementation mode of step 102, when it is determined that the scenario is POWER-OFF or NOT IN SERVICE AREA and it is detected that the user terminal is powered on or returns to the service area, the outcall notification is initiated to the user terminal, and if the outcall notification is unsuccessful, the SMS notification is issued to the user terminal.

Step 103: when it is determined that the scenario is BUSY, the outcall notification is initiated to the user terminal after it is detected that the user terminal is hung up.

In addition, in step 103, when the outcall notification initiated to the user terminal is unsuccessful, the SMS notification can be issued to the user terminal.

Step 104: when it is determined that the scenario is NO ANSWER, the SMS notification is issued to the user terminal.

In step 102 to step 104, corresponding processing is performed according to different scenarios.

Preferably, in the embodiment of the present disclosure, the quantity of unread voice mails in the voice mailbox of the user terminal can be acquired, when it is determined that the quantity of the unread voice mails is greater than or equal to a preset threshold value, and/or when it is determined that there is an urgently important mail in the voice mailbox of the user terminal, the SMS notification is issued to the user terminal, and when a sending success receipt of the SMS notification is received, it is determined that the user terminal is accessible, and the outcall notification is initiated to the user terminal.

That is, in the embodiment of the present disclosure, it can be decided whether the outcall notification is initiated according to the quantity of the unread voice mails of the user. If the quantity of the unread voice mails stored in the mailbox of the user exceeds a certain threshold value or there is the urgently important mail in the mailbox, a short notification message can be issued to the user terminal in real time, when a short message sending success receipt sent by the SMSC is received, it is determined that the user terminal is accessible, and when the user terminal is accessible, the user terminal is actively outbound and a message is broadcast to the user terminal. It is ensured that the user terminal can obtain message information in time. Compared with the traditional voice mailbox, the technical solutions provided by the embodiment of the present disclosure can more effectively avoid omission of the personal voice mail information of the user, thereby improving the practicality of the voice mailbox system.

The technical solutions provided by the embodiment of the present disclosure are described below with reference to the drawings in detail.

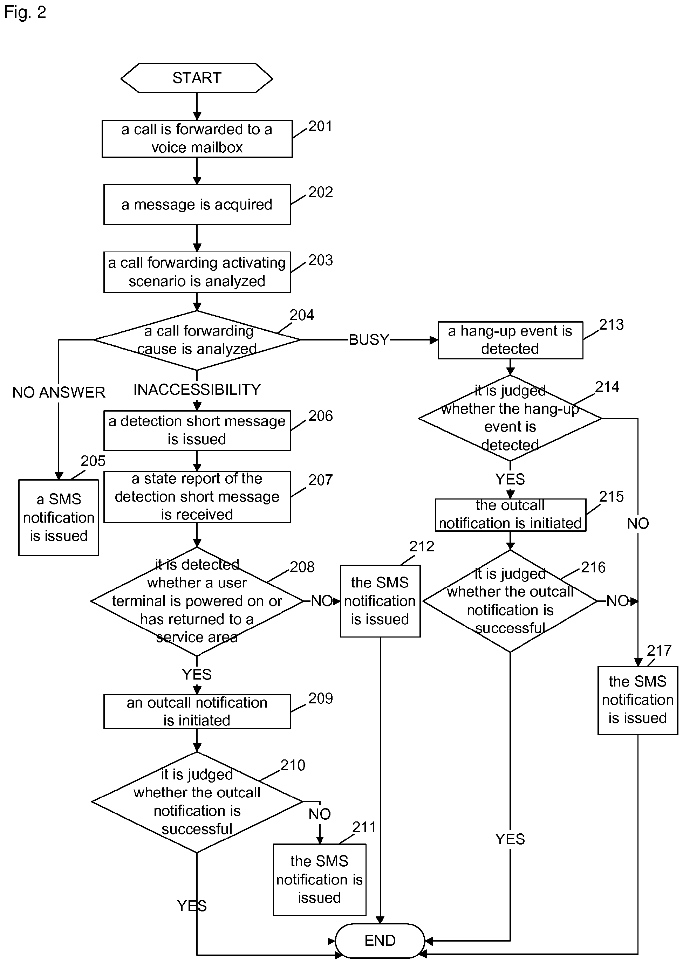

Fig. 2 is a flowchart 2 of a voice mailbox notification method according to an embodiment of the present disclosure. As shown in Fig. 2, the method includes the steps as follows.

Step 201: when a user A dials a terminal of a registered user B, a call is forwarded to a voice mailbox.

Step 202: the call is forwarded to the voice mailbox to acquire a message left in the voice mailbox by the user A.

Step 203: a call forwarding activating scenario is analyzed.

A call forwarding cause value is acquired from a Transaction Capabilities Application Part (TCAP)-Initial Detection Point (IDP) of a call forwarding activating service, and the call forwarding activating scenario is further analyzed and judged.

Step 204: the call forwarding activating scenario is determined, if the call forwarding activating scenario is determined to be USER NO ANSWER, step 205 is executed, if the call forwarding activating scenario is determined to be USER INACCESSIBILITY (the user terminal is powered off or not in the service area), step 206 is executed, and if the call forwarding activating scenario is determined to be BUSY (the user terminal is busy), step 213 is executed.

Step 205: a SMS notification is issued to the terminal of the user B, and the operation is ended.

Step 206: a detection short message is issued to the terminal of the user B.

Step 207: a state report of the detection short message, sent by an SMSC, is received.

When a state report representative of a success in sending of the detection short message is received from the SMSC, it is determined that the user terminal is in an accessible state; and when a state report representative of a failure in sending of the detection short message is received from the SMSC, the state of the terminal of the user B is analyzed to be POWER-OFF or NOT IN SERVICE AREA according to error codes in the state report.

Step 208: it is judged whether the terminal of the user B is powered on or has returned to the service area according to a detection short message receipt, if yes, step 209 is executed, otherwise, step 212 is executed.

Step 209: an outcall notification is initiated to the terminal of the user B.

Step 210: it is detected whether the outcall notification is successful, if yes, the operation is ended, otherwise, step 211 is executed.

Step 211: the SMS notification is issued to the terminal of the user B, and the operation is ended.

Step 212: the SMS notification is issued to the terminal of the user B, and the operation is ended.

Step 213: a hang-up event is detected for the terminal of the user B.

Step 214: it is judged whether the hang-up event is detected, if yes, step 215 is executed, otherwise, step 217 is executed.

Step 215: the outcall notification is initiated to the terminal of the user B.

Step 213 can be executed periodically until the hang-up event is detected, so that the outcall notification can be initiated instantly when the terminal of the user B is hung up, and the success rate of the outcall notification is improved.

Step 216: it is judged whether the outcall notification is successful, if yes, the operation is ended, otherwise, step 217 is executed.

Step 217: the SMS notification is issued to the terminal of the user B, and the operation is ended.

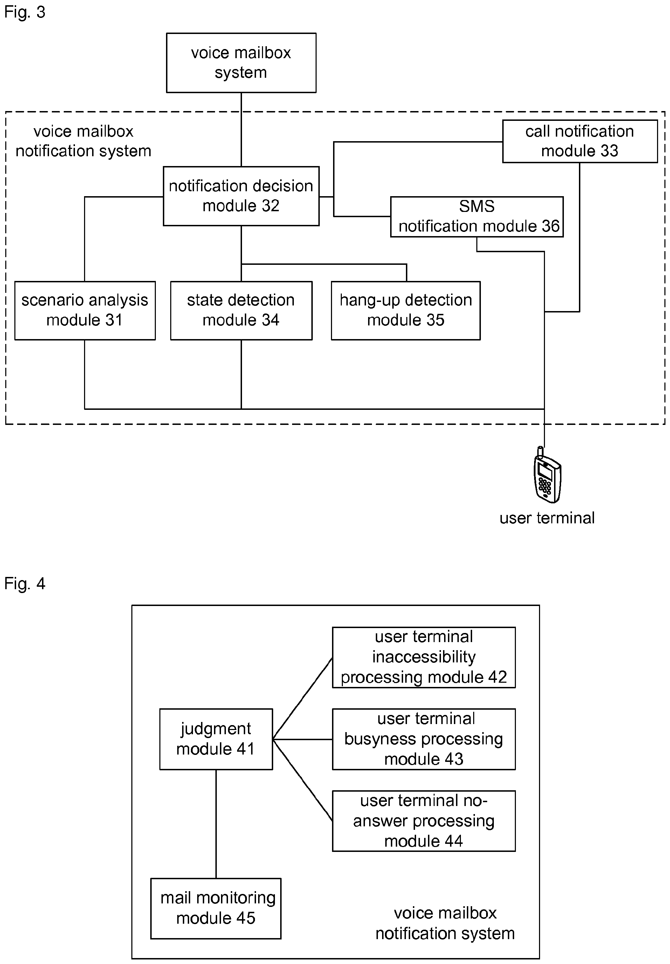

An embodiment of the present disclosure also provides a voice mailbox notification system. Fig. 3 is a structural diagram 1 of a voice mailbox notification system according to an embodiment of the present disclosure. As shown in Fig. 3, the voice mailbox notification system is arranged between a voice information system and a user terminal. The voice mailbox notification system provided by an embodiment of the present disclosure includes:
a scenario analysis module 31, a notification decision module 32, a call notification module 33, a state detection module 34, a hang-up detection module 35 and a SMS notification module 36, wherein
the scenario analysis module 31 is configured to determine a scenario for activating a voice mailbox of a user terminal;
the notification decision module 32 is configured to, when the scenario analysis module 31 determines that the scenario is POWER-OFF or NOT IN SERVICE AREA, activate the state detection module 34 to detect whether the user terminal has been powered on or has returned to the service area, and to, when the state detection module 34 detects that the user terminal has been powered on or has returned to the service area, activate the call notification module 33 to initiate an outcall notification to the user terminal;
the notification decision module 32 is further configured to, when the scenario analysis module 31 determines that the scenario is BUSY, activate the hang-up detection module 35 to detect whether the user terminal has been hung up, and to, when it is determined that the user terminal has been hung up, activate the call notification module 33 to initiate the outcall notification to the user terminal; and
the notification decision module 32 is further configured to, when the scenario analysis module 31 determines that the scenario is NO ANSWER, activate the SMS notification module 36 to issue a SMS notification to the user terminal.

Wherein, the state detection module 34 is further configured to:
issue a detection short message to the user terminal; and
when an issuing success report of the detection short message is received from an SMSC, determine that the user terminal has been powered on or has returned to the service area.

Wherein, the notification decision module 32 is further configured to acquire the quantity of unread voice mails in the voice mailbox of the user terminal, and to, when it is determined that the quantity of the unread voice mails is greater than or equal to a preset threshold value and/or when it is determined that there is an urgently important mail in the voice mailbox of the user terminal, activate the SMS notification module 36 to issue the SMS notification to the user terminal; and
the notification decision module 32 is further configured to, when a sending success receipt of the SMS notification is received, activate the call notification module 33 to initiate the outcall notification to the user terminal.

Wherein, the notification decision module 32 is further configured to, when the scenario analysis module 31 determines that the scenario is POWER-OFF or NOT IN SERVICE AREA, the state detection module 34 detects that the user terminal is not powered on or does not return to the service area and the outcall notification initiated to the user terminal under the activating of the call notification module 33 is unsuccessful, activate the SMS notification module 36 to issue the SMS notification to the user terminal.

Wherein, the notification decision module 32 is further configured to, when the scenario analysis module 31 determines that the scenario is POWER-OFF or NOT IN SERVICE AREA, the state detection module 34 detects that the user terminal has been powered on or has returned to the service area and the outcall notification initiated to the user terminal under the activating of the call notification module 33 is unsuccessful, activate the SMS notification module 36 to issue the SMS notification to the user terminal.

Wherein, the notification decision module 32 is further configured to, when the scenario analysis module 31 determines that the scenario is BUSY, the state detection module 34 detects that the user terminal is hung up and the outcall notification initiated to the user terminal under the activating of the call notification module 33 is unsuccessful, activate the SMS notification module 36 to issue the SMS notification to the user terminal.

Wherein, the scenario analysis module 31 is further configured to: determine the scenario for activating the voice mailbox of the user terminal according to a call forwarding cause value for activating the voice mailbox of the user terminal.

The modules can be arranged in different devices (servers) respectively, and can be arranged in the same device (server), and the scenario analysis module 31, the notification decision module 32, the call notification module 33, the state detection module 34, the hang-up detection module 35 and the SMS notification module 36 can be achieved by a Central Processing Unit (CPU), a Digital Signal Processor (DSP) or a Field Programmable Gate Array (FPGA) in a corresponding device.

The voice mailbox notification system as shown in Fig. 3 is described below by taking processing of an event that a terminal of a user B is powered off when a terminal of a user A calls the terminal of the user B as an example.

Step 301: the terminal of the user A calls the terminal of the user B, but the terminal of the user B has been powered off, and a call is forwarded to the voice mailbox system.

Step 302: the scenario analysis module 31 acquires a call forwarding cause value from a TCAP-IDP of a call forwarding activating service.

It is supposed that a call forwarding activating scenario analyzed in step 302 is USER INACCESSIBILITY (namely the user terminal is powered off).

Step 303: when the user A has left a message in the voice mailbox system, the notification decision module 32 activates the state detection module 34 to initiate the state detection of the terminal of the user B.

Step 304: the state detection module 34 issues a detection short message to acquire the state of the terminal of the user B, if the terminal of the user B has been powered on, step 305 and step 306 are executed; and if the terminal of the user B is not powered on, step 307 and step 308 are executed.

The state (POWER ON, POWER OFF) of the terminal of the user B is stored in the SMSC, when sending of the detection short message fails, the SMS notification module 36 receives a state report representative of a failure in sending of the detection short message from the SMSC instantly, it is analyzed that the state of the terminal of the user B is POWER OFF from error codes in the state report, and the state of the terminal of the user B is cached; and

Accordingly, when sending of the detection short message succeeds, the SMS notification module 36 receives a state report representative of a success in sending of the detection short message from the SMSC instantly, it is determined that the terminal of the user B is in a power-on state, and the state of the terminal of the user B is cached, so that the newest state of the terminal of the user B can be instantly determined by periodically issuing the detection short message.

Step 305: the state detection module 34 sends the state report representative of the success in sending of the detection short message to the notification decision module 32.

Step 306: the notification decision module 32 determines that the terminal of the user B has been powered on, and activates the call notification module 33 to initiate an outcall notification to the terminal of the user B.

Step 307: the state detection module 34 sends a state report representative of a failure in sending of the detection short message to the notification decision module 32.

Step 308: the notification decision module 32 inquires an inaccessibility cause of the terminal of the user B, and if the terminal of the user B is not in the service area or the terminal of the user B is powered off, the SMS notification module 36 is activated to initiate a SMS notification to the terminal of the user B.

In step 306, when the call notification module 33 initiates the outcall notification to the terminal of the user B, the success rate of the outcall notification is high due to the fact that the terminal of the user B is just powered on, and the user cannot be disturbed.

In conclusion, by means of the technical solutions provided by the embodiments of the present disclosure, wasting of telecom resources and disturbance of the user caused by repeated notifications are effectively avoided, an appropriate notification policy can be intelligently adopted according to different message activating scenarios, the timeliness and success rate of mail notifications are greatly improved, and the user experiences are improved.

An embodiment of the present disclosure also provides a voice mailbox notification system. Fig. 4 is a structural diagram 2 of a voice mailbox notification system according to an embodiment of the present disclosure. As shown in Fig. 4, the voice mailbox notification system provided by an embodiment of the present disclosure includes:
a judgment module 41, a user terminal inaccessibility processing module 42, a user terminal busyness processing module 43 and a user terminal no-answer processing module 44, wherein
the judgment module 41 is configured to determine a scenario for activating a voice mailbox of a user terminal;
the user terminal inaccessibility processing module 42 is configured to, when it is determined that the scenario is POWER-OFF or NOT IN SERVICE AREA, detect whether the user terminal has been powered on or has returned to the service area, and initiate an outcall notification to the user terminal when it is detected that the user terminal has been powered on or has returned to the service area;
the user terminal busyness processing module 43 is configured to, when it is determined that the scenario is BUSY and it is detected that the user terminal is hung up, initiate the outcall notification to the user terminal; and
the user terminal no-answer processing module 44 is configured to, when it is determined that the scenario is NO ANSWER, issue a SMS notification to the user terminal.

Wherein, the judgement module 41 is further configured to: determine the scenario for activating the voice mailbox of the user terminal according to a call forwarding cause value for activating the voice mailbox of the user terminal.

Wherein, the user terminal inaccessibility processing module 42 is further configured to: issue a detection short message to the user terminal; and determine that the user terminal has been powered on or has returned to the service area when an issuing success report of the detection short message is received from an SMSC.

Wherein, the user terminal inaccessibility processing module 42 is further configured to: issue, when it is determined that the scenario is POWER OFF or NOT IN SERVICE AREA and it is detected that the user terminal is not powered on or does not return to the service area, the SMS notification to the user terminal.

Wherein, the user terminal inaccessibility processing module 42 is further configured to: initiate, when it is determined that the scenario is POWER OFF or NOT IN SERVICE AREA and it is detected that the user terminal has been powered on or has returned to the service area, the outcall notification to the user terminal, and issue the SMS notification to the user terminal when the outcall notification is unsuccessful.

Wherein, the user terminal busyness processing module 43 is further configured to: initiate the outcall notification to the user terminal when it is determined that the scenario is BUSY and it is detected that the user terminal is hung up, and issue the SMS notification to the user terminal when the outcall notification is unsuccessful.

The voice mailbox notification system further includes: a mail monitoring module 45, configured to acquire the quantity of unread voice mails in the voice mailbox of the user terminal, to issue, when it is determined that the quantity of the unread voice mails is greater than or equal to a preset threshold value and/or when it is determined that there is an urgently important mail in the voice mailbox of the user terminal, the SMS notification to the user terminal, and to initiate, when a sending success receipt of the SMS notification is received, the outcall notification to the user terminal.

The modules can be arranged in different devices (servers) respectively, and can be arranged in the same device (server), and the judgment module 41, the user terminal inaccessibility processing module 42, the user terminal busyness processing module 43, the user terminal no-answer processing module 44 and the mail monitoring module 45 can be achieved by a CPU, a DSP or an FPGA in a corresponding device.

It is important to note that in practical applications, based on a voice information notification method according to embodiment 1 and embodiment 2, the structure of a voice information notification system according to an embodiment of the present disclosure can be achieved in other modes, not limited to modes as shown in Fig. 3 and Fig. 4, and there are not detailed descriptions herein.

In conclusion, by means of the technical solutions provided by the embodiments of the present disclosure, wasting of the telecom resources and disturbance of the user caused by the repeated notifications are effectively avoided, the appropriate notification policy can be intelligently adopted according to different message activating scenarios, the timeliness and success rate of the notifications are greatly improved, and the user experiences of the voice mailbox system are improved.

Those skilled in the art should understand that the embodiments of the present disclosure can provide a method, a system or a computer program product. Thus, a hardware embodiment form, a software embodiment form or a software-hardware combined embodiment form can be adopted in the present disclosure. Moreover, a computer program product form implemented on one or more computer available storage media containing computer available program codes and including, but not limited to, a disk memory, an optical memory and the like can be adopted in the present disclosure.

The present disclosure is described with reference to flowcharts and/or block diagrams of the method, the device (system) and the computer program product according to the embodiments of the present disclosure. It should understand that each flow and/or block in the flowcharts and/or the block diagrams and a combination of the flows and/or the blocks in the flowcharts and/or the block diagrams can be achieved by computer program instructions. These computer program instructions can be provided for a general computer, a dedicated computer, an embedded processor or processors of other programmable data processing devices to generate a machine, so that an apparatus for achieving functions assigned in one or more flows of the flowcharts and/or one or more blocks of the block diagrams is generated via instructions executed by the computers or the processors of the other programmable data processing devices.

These computer program instructions can also be stored in a computer readable memory capable of guiding the computers or the other programmable data processing devices to work in a specific mode, so that a manufactured product including an instruction apparatus is generated via the instructions stored in the computer readable memory, and the instruction apparatus achieves the functions assigned in one or more flows of the flowcharts and/or one or more blocks of the block diagrams.

These computer program instructions can also be loaded to the computers or the other programmable data processing devices, so that processing achieved by the computers is generated by executing a series of operation steps on the computers or the other programmable data processing devices, and therefore the instructions executed on the computers or the other programmable data processing devices provide a step of achieving the functions assigned in one or more flows of the flowcharts and/or one or more blocks of the block diagrams.

The above is only implementation modes of the embodiments of the present disclosure. It should point out that those ordinary skilled in the technical art can also make some improvements and modifications without departing from the principle of the embodiments of the present disclosure. These improvements and modifications should fall within the protection scope of the embodiments of the present disclosure.

## Claims

1. A voice mailbox notification method executed by a voice mailbox of a user terminal, comprising:
determining a scenario for activating a voice mailbox of the user terminal (101);
detecting, when it is determined that the scenario is POWER-OFF or NOT IN SERVICE AREA, whether the user terminal has been powered on or has returned to the service area, and when it is detected that the user terminal has been powered on or has returned to the service area, initiating an outcall notification to the user terminal (103);
initiating, when it is determined that the scenario is BUSY and it is detected that the user terminal is hung up, the outcall notification to the user terminal (102); and
issuing, when it is determined that the scenario is NO ANSWER, a Short Message Service, SMS, notification to the user terminal (104).

2. The method according to claim 1, wherein the step of detecting that the user terminal has been powered on or has returned to the service area comprises:
issuing a detection short message to the user terminal; and
determining, when an issuing success report of the detection short message is received from a short message service centre, that the user terminal has been powered on or has returned to the service area.

3. The method according to claim 1, further comprising:
acquiring a quantity of unread voice mails in the voice mailbox of the user terminal; when it is determined that the quantity of the unread voice mails is greater than or equal to a preset threshold value, and/or when it is determined that there is an urgently important mail in the voice mailbox of the user terminal,
issuing the SMS notification to the user terminal, and initiating the outcall notification to the user terminal when a sending success receipt of the SMS notification is received.

4. The method according to claim 1, further comprising: when it is determined that the scenario is POWER-OFF or NOT IN SERVICE AREA, it is detected that the user terminal has been powered on or has returned to the service area, and the outcall notification initiated to the user terminal is unsuccessful,
issuing the SMS notification to the user terminal.

5. The method according to claim 1, further comprising: when it is determined that the scenario is POWER-OFF or NOT IN SERVICE AREA, and it is detected that the user terminal is not powered on or does not return to the service area,
issuing the SMS notification to the user terminal.

6. The method according to claim 1, further comprising: when it is determined that the scenario is BUSY, it is detected that the user terminal is hung up, and the outcall notification initiated to the user terminal is unsuccessful,
issuing the SMS notification to the user terminal.

7. The method according to any one of claims 1 to 6, wherein the step of determining the scenario for activating the voice mailbox of the user terminal comprises:
determining the scenario for activating the voice mailbox of the user terminal according to a call forwarding cause value for activating the voice mailbox of the user terminal.

8. A voice mailbox notification system comprising: a scenario analysis module (31), a notification decision module (32), a call notification module (33), a state detection module (34), a hang-up detection module (35) and a SMS notification module (36), wherein
the scenario analysis module (31) is configured to determine a scenario for activating a voice mailbox of a user terminal;
the notification decision module (32) is configured, when the scenario analysis module (31) determines that the scenario is POWER-OFF or NOT IN SERVICE AREA, to activate the state detection module (34) to detect whether the user terminal has been powered on or has returned to the service area, and to activate the call notification module (33) to initiate an outcall notification to the user terminal when the state detection module (34) detects that the user terminal has been powered on or has returned to the service area;
the notification decision module (32) is further configured, when the scenario analysis module (31) determines that the scenario is BUSY, to activate the hang-up detection module (35) to detect whether the user terminal has been hung up, and to activate the call notification module (33) to initiate the outcall notification to the user terminal when it is determined that the user terminal has been hung up; and
the notification decision module (32) is further configured, when the scenario analysis module (31) determines that the scenario is NO ANSWER, to activate the SMS notification module (36) to issue a Short Message Service, SMS, notification to the user terminal.

9. The system according to claim 8, wherein the state detection module (34) is further configured to:
issue a detection short message to the user terminal; and
determine that the user terminal has been powered on or has returned to the service area when an issuing success report of the detection short message is received from a short message service centre.

10. The system according to claim 8, wherein
the notification decision module (32) is further configured to acquire a quantity of unread voice mails in the voice mailbox of the user terminal, and to activate the SMS notification module (36) to issue the SMS notification to the user terminal when it is determined that the quantity of the unread voice mails is greater than or equal to a preset threshold value and/or when it is determined that there is an urgently important mail in the voice mailbox of the user terminal; and
the notification decision module (32) is further configured, when a sending success receipt of the SMS notification is received, to activate the call notification module (33) to initiate the outcall notification to the user terminal.

11. The system according to claim 8, wherein
the notification decision module (32) is further configured, when the scenario analysis module (31) determines that the scenario is POWER-OFF or NOT IN SERVICE AREA, the state detection module (34) detects that the user terminal is not powered on or does not return to the service area and the outcall notification initiated to the user terminal under the activating of the call notification module (33) is unsuccessful, to activate the SMS notification module (36) to issue the SMS notification to the user terminal.

12. The system according to claim 8, wherein
the notification decision module (32) is further configured, when the scenario analysis module (31) determines that the scenario is POWER-OFF or NOT IN SERVICE AREA, the state detection module (34) detects that the user terminal has been powered on or has returned to the service area and the outcall notification initiated to the user terminal under the activating of the call notification module (33) is unsuccessful, to activate the SMS notification module (36) to issue the SMS notification to the user terminal.

13. The system according to claim 8, wherein
the notification decision module (32) is further configured, when the scenario analysis module (31) determines that the scenario is BUSY, the state detection module (34) detects that the user terminal is hung up and the outcall notification initiated to the user terminal under the activating of the call notification module (33) is unsuccessful, to activate the SMS notification module (36) to issue the SMS notification to the user terminal.

14. The system according to any one of claims 8 to 13, wherein the scenario analysis module (31) is further configured to: determine the scenario for activating the voice mailbox of the user terminal according to a call forwarding cause value for activating the voice mailbox of the user terminal.

15. A computer storage medium storing computer executable instructions configured to execute the voice mailbox notification method according to any one of claims 1 to 7.

## Patentansprüche

1. Sprachboxbenachrichtigungsverfahren, das von einer Sprachbox eines Benutzerendgeräts ausgeführt wird und umfasst:
Bestimmen eines Szenarios zum Aktivieren einer Sprachbox des Benutzerendgeräts (101);
Erkennen, wenn bestimmt wird, dass das Szenario POWER-OFF oder NOT IN SERVICE AREA ist, ob das Benutzerendgerät eingeschaltet wurde oder in das Versorgungsgebiet zurückgekehrt ist, und Initiieren, wenn bestimmt wird, dass das Benutzerendgerät eingeschaltet wurde oder in das Versorgungsgebiet zurückgekehrt ist, einer Outcall-Benachrichtigung an das Benutzerendgerät (103);
Initiieren, wenn bestimmt wird, dass das Szenario BUSY ist, und erkannt wird, dass das Benutzerendgerät aufgelegt ist, der Outcall-Benachrichtigung an das Benutzerendgerät (102); und
Ausgeben, wenn bestimmt wird, dass das Szenario NO ANSWER ist, einer Kurznachrichtendienst, SMS,-Benachrichtigung an das Benutzerendgerät (104).

2. Verfahren nach Anspruch 1, wobei der Schritt des Erkennens, dass das Benutzerendgerät eingeschaltet wurde oder in das Versorgungsgebiet zurückgekehrt ist, umfasst:
Ausgeben einer Erkennungs-Kurznachricht an das Benutzerendgerät; und
Bestimmen, wenn eine Ausgabeerfolgsmeldung der Erkennungs-Kurznachricht von einer Kurznachrichtendienststelle empfangen wird, dass das Benutzerendgerät eingeschaltet wurde oder in das Versorgungsgebiet zurückgekehrt ist.

3. Verfahren nach Anspruch 1, ferner umfassend:
Erfassen einer Menge ungelesener Sprachmitteilungen in der Sprachbox des Benutzerendgeräts; wenn bestimmt wird, dass die Menge der ungelesenen Sprachmitteilungen größer als oder gleich wie ein voreingestellter Schwellenwert ist, und/oder wenn bestimmt wird, dass eine sehr wichtige Mitteilung in der Sprachbox des Benutzerendgeräts vorhanden ist,
Ausgeben der SMS-Benachrichtigung an das Benutzerendgerät und Initiieren der Outcall-Benachrichtigung an das Benutzerendgerät, wenn eine Sendeerfolgsquittung der SMS-Nachricht empfangen wird.

4. Verfahren nach Anspruch 1, ferner umfassend: wenn bestimmt wird, dass das Szenario POWER-OFF oder NOT IN SERVICE AREA ist, erkannt wird, dass das Benutzerendgerät eingeschaltet wurde oder in das Versorgungsgebiet zurückgekehrt ist, und die an das Benutzerendgerät initiierte Outcall-Benachrichtigung erfolglos ist,
Ausgeben der SMS-Benachrichtigung an das Benutzerendgerät.

5. Verfahren nach Anspruch 1, ferner umfassend: wenn bestimmt wird, dass das Szenario POWER-OFF oder NOT IN SERVICE AREA ist, und erkannt wird, dass das Benutzerendgerät nicht eingeschaltet ist oder nicht in das Versorgungsgebiet zurückkehrt,
Ausgeben der SMS-Benachrichtigung an das Benutzerendgerät.

6. Verfahren nach Anspruch 1, ferner umfassend: wenn bestimmt wird, dass das Szenario BUSY ist, erkannt wird, dass das Benutzerendgerät aufgelegt ist, und die an das Benutzerendgerät initiierte Outcall-Benachrichtigung erfolglos ist,
Ausgeben der SMS-Benachrichtigung an das Benutzerendgerät.

7. Verfahren nach einem der Ansprüche 1 bis 6, wobei der Schritt des Bestimmens des Szenarios zum Aktivieren der Sprachbox des Benutzerendgeräts umfasst:
Bestimmen des Szenarios zum Aktivieren der Sprachbox des Benutzerendgeräts gemäß einem Rufweiterleitungsursachenwert zum Aktivieren der Sprachbox des Benutzerendgeräts.

8. Sprachboxbenachrichtigungssystem, umfassend:
ein Szenarioanalysemodul (31), ein Benachrichtigungsentscheidungsmodul (32), ein Rufbenachrichtigungsmodul (33), ein Zustandserkennungsmodul (34), ein Auflegen-Erkennungsmodul (35) und ein SMS-Benachrichtigungsmodul (36), wobei
das Szenarioanalysemodul (31) zum Bestimmen eines Szenarios zum Aktivieren einer Sprachbox eines Benutzerendgeräts konfiguriert ist;
das Benachrichtigungsentscheidungsmodul (32) so konfiguriert ist, dass es, wenn das Szenarioanalysemodul (31) bestimmt, dass das Szenario POWER-OFF oder NOT IN SERVICE AREA ist, das Zustandserkennungsmodul (34) aktiviert, um zu erkennen, ob das Benutzerendgerät eingeschaltet wurde oder in das Versorgungsgebiet zurückgekehrt ist, und das Rufbenachrichtigungsmodul (33) aktiviert, um eine Outcall-Benachrichtigung an das Benutzerendgerät zu initiieren, wenn das Zustandserkennungsmodul (34) erkennt, dass das Benutzerendgerät eingeschaltet wurde oder in das Versorgungsgebiet zurückgekehrt ist;
das Benachrichtigungsentscheidungsmodul (32) ferner so konfiguriert ist, dass es, wenn das Szenarioanalysemodul (31) bestimmt, dass das Szenario BUSY ist, das Auflegen-Erkennungsmodul (35) aktiviert, um zu erkennen, ob das Benutzerendgerät aufgelegt wurde, und das Rufbenachrichtigungsmodul (33) aktiviert, um eine Outcall-Benachrichtigung an das Benutzerendgerät zu initiieren, wenn bestimmt wird, dass das Benutzerendgerät aufgelegt wurde;
das Benachrichtigungsentscheidungsmodul (32) ferner so konfiguriert ist, dass es, wenn das Szenarioanalysemodul (31) bestimmt, dass das Szenario NO ANSWER ist, das SMS-Benachrichtigungsmodul (36) aktiviert, um eine Kurznachrichtendienst, SMS,-Benachrichtigung an das Benutzerendgerät auszugeben.

9. System nach Anspruch 8, wobei das Zustandserkennungsmodul (34) ferner konfiguriert ist zum:
Ausgeben einer Erkennungs-Kurznachricht an das Benutzerendgerät; und
Bestimmen, dass das Benutzerendgerät eingeschaltet wurde oder in das Versorgungsgebiet zurückgekehrt ist, wenn eine Ausgabeerfolgsmeldung der Erkennungs-Kurznachricht von einer Kurznachrichtendienststelle empfangen wird.

10. System nach Anspruch 8, wobei:
das Benachrichtigungsentscheidungsmodul (32) ferner so konfiguriert ist, dass es eine Menge ungelesener Sprachmitteilungen in der Sprachbox des Benutzerendgeräts erfasst und das SMS-Benachrichtigungsmodul (36) aktiviert, um die SMS-Benachrichtigung an das Benutzerendgerät auszugeben, wenn bestimmt wird, dass die Menge der ungelesenen Sprachmitteilungen größer als oder gleich wie ein voreingestellter Schwellenwert ist, und/oder wenn bestimmt wird, dass eine sehr wichtige Mitteilung in der Sprachbox des Benutzerendgeräts vorhanden ist; und
das Benachrichtigungsentscheidungsmodul (32) ferner so konfiguriert ist, dass es, wenn eine Sendeerfolgsquittung der SMS-Benachrichtigung empfangen wird, das Rufbenachrichtigungsmodul (33) aktiviert, um die Outcall-Benachrichtigung an das Benutzerendgerät zu initiieren.

11. System nach Anspruch 8, wobei:
das Benachrichtigungsentscheidungsmodul (32) ferner so konfiguriert ist, dass es, wenn das Szenarioanalysemodul (31) bestimmt, dass das Szenario POWER-OFF oder NOT IN SERVICE AREA ist, das Zustandserkennungsmodul (34) erkennt, dass das Benutzerendgerät nicht eingeschaltet ist oder nicht in das Versorgungsgebiet zurückkehrt, und die Outcall-Benachrichtigung, die gemäß dem Aktivieren der Rufbenachrichtigungsmodul (33) an das Benutzerendgerät initiiert wurde, erfolglos ist, das SMS-Benachrichtigungsmodul (36) aktiviert, um die SMS-Benachrichtigung an das Benutzerendgerät auszugeben.

12. System nach Anspruch 8, wobei:
das Benachrichtigungsentscheidungsmodul (32) ferner so konfiguriert ist, dass es, wenn das Szenarioanalysemodul (31) bestimmt, dass das Szenario POWER-OFF oder NOT IN SERVICE AREA ist, das Zustandserkennungsmodul (34) erkennt, dass das Benutzerendgerät eingeschaltet wurde oder in das Versorgungsgebiet zurückgekehrt ist, und die Outcall-Benachrichtigung, die gemäß dem Aktivieren der Rufbenachrichtigungsmodul (33) an das Benutzerendgerät initiiert wurde, erfolglos ist, das SMS-Benachrichtigungsmodul (36) aktiviert, um die SMS-Benachrichtigung an das Benutzerendgerät auszugeben.

13. System nach Anspruch 8, wobei:
das Benachrichtigungsentscheidungsmodul (32) ferner so konfiguriert ist, dass es, wenn das Szenarioanalysemodul (31) bestimmt, dass das Szenario BUSY ist, das Zustandserkennungsmodul (34) erkennt, dass das Benutzerendgerät aufgelegt ist, und die Outcall-Benachrichtigung, die gemäß dem Aktivieren der Rufbenachrichtigungsmodul (33) an das Benutzerendgerät initiiert wurde, erfolglos ist, das SMS-Benachrichtigungsmodul (36) aktiviert, um die SMS-Benachrichtigung an das Benutzerendgerät auszugeben.

14. System nach einem der Ansprüche 8 bis 13, wobei das Szenarioanalysemodul (31) ferner konfiguriert ist zum: Bestimmen des Szenarios zum Aktivieren der Sprachbox des Benutzerendgeräts gemäß einem Rufweiterleitungsursachenwert zum Aktivieren der Sprachbox des Benutzerendgeräts.

15. Computerspeichermedium, das computerausführbare Anweisungen speichert, die zum Ausführen des Sprachboxbenachrichtigungsverfahrens nach einem der Ansprüche 1 bis 7 konfiguriert sind.

## Revendications

1. Procédé de notification de boîte vocale exécuté par une boîte vocale d'un terminal d'utilisateur, comprenant les étapes ci-dessous consistant à :
déterminer un scénario d'activation d'une boîte vocale du terminal d'utilisateur (101) ;
détecter, lorsqu'il est déterminé que le scénario est « POWER-OFF » (hors tension) ou « NOT IN SERVICE AREA » (hors de la zone de service), si le terminal d'utilisateur a été mis sous tension ou s'il est revenu au sein de la zone de service, et lorsqu'il est détecté que le terminal d'utilisateur a été mis sous tension ou qu'il est revenu au sein de la zone de service, initier une notification d'appel externe vers le terminal d'utilisateur (103) ;
initier, lorsqu'il est déterminé que le scénario est « BUSY » (occupé) et lorsqu'il est détecté que le terminal d'utilisateur est raccroché, la notification d'appel externe vers le terminal d'utilisateur (102) ; et
envoyer, lorsqu'il est déterminé que le scénario est « NO ANSWER » (aucune réponse), une notification de service de messages courts, SMS, au terminal d'utilisateur (104).

2. Procédé selon la revendication 1, dans lequel l'étape consistant à détecter que le terminal d'utilisateur a été mis sous tension ou qu'il est revenu au sein de la zone de service comprend les étapes ci-dessous consistant à :
envoyer un message court de détection au terminal d'utilisateur ; et
déterminer, lorsqu'un rapport de réussite d'envoi du message court de détection est reçu à partir d'un centre de service de messages courts, si le terminal d'utilisateur a été mis sous tension ou s'il est revenu au sein de la zone de service.

3. Procédé selon la revendication 1, comprenant en outre les étapes ci-dessous consistant à :
acquérir une quantité de messages vocaux non lus dans la boîte vocale du terminal d'utilisateur ;
lorsqu'il est déterminé que la quantité de messages vocaux non lus est supérieure ou égale à une valeur de seuil prédéfinie, et/ou lorsqu'il est déterminé qu'il existe un message urgent important dans la boîte vocale du terminal d'utilisateur :
envoyer la notification de service SMS au terminal d'utilisateur, et initier la notification d'appel externe vers le terminal d'utilisateur lorsqu'un récépissé de réussite d'envoi de la notification de service SMS est reçu.

4. Procédé selon la revendication 1, comprenant en outre l'étape ci-dessous consistant à : lorsqu'il est déterminé que le scénario est « POWER-OFF » (hors tension) ou « NOT IN SERVICE AREA » (hors de la zone de service), lorsqu'il est détecté que le terminal d'utilisateur a été mis sous tension ou est revenu au sein de la zone de service, et lorsque la notification d'appel externe initiée vers le terminal d'utilisateur est infructueuse :
envoyer la notification de service SMS au terminal d'utilisateur.

5. Procédé selon la revendication 1, comprenant en outre l'étape ci-dessous consistant à : lorsqu'il est déterminé que le scénario est « POWER-OFF » (hors tension) ou « NOT IN SERVICE AREA » (hors de la zone de service), et lorsqu'il est détecté que le terminal d'utilisateur n'est pas sous tension ou ne revient pas dans la zone de service :
envoyer la notification de service SMS au terminal d'utilisateur.

6. Procédé selon la revendication 1, comprenant en outre l'étape ci-dessous consistant à : lorsqu'il est déterminé que le scénario est « BUSY » (occupé), lorsqu'il est détecté que le terminal d'utilisateur est raccroché, et lorsque la notification d'appel externe initiée vers le terminal d'utilisateur est infructueuse :
envoyer la notification de service SMS au terminal d'utilisateur.

7. Procédé selon l'une quelconque des revendications 1 à 6, dans lequel l'étape consistant à déterminer le scénario d'activation de la boîte vocale du terminal d'utilisateur comprend l'étape ci-dessous consistant à :
déterminer le scénario d'activation de la boîte vocale du terminal d'utilisateur selon une valeur de cause d'acheminement d'appel pour activer la boîte vocale du terminal d'utilisateur.

8. Système de notification de boîte vocale comprenant :
un module d'analyse de scénario (31), un module de décision de notification (32), un module de notification d'appel (33), un module de détection d'état (34), un module de détection de raccrochage (35) et un module de notification de service SMS (36), dans lequel
le module d'analyse de scénario (31) est configuré de manière à déterminer un scénario d'activation d'une boîte vocale d'un terminal d'utilisateur ;
le module de décision de notification (32) est configuré, lorsque le module d'analyse de scénario (31) détermine que le scénario est « POWER-OFF » (hors tension) ou « NOT IN SERVICE AREA » (hors de la zone de service), de manière à activer le module de détection d'état (34) afin de détecter si le terminal d'utilisateur a été mis sous tension ou s'il est revenu au sein de la zone de service, et à activer le module de notification d'appel (33) afin d'initier une notification d'appel externe vers le terminal d'utilisateur lorsque le module de détection d'état (34) détecte que le terminal d'utilisateur a été mis sous tension ou qu'il est revenu au sein de la zone de service ;
le module de décision de notification (32) est en outre configuré, lorsque le module d'analyse de scénario (31) détermine que le scénario est « BUSY » (occupé), de manière à activer le module de détection de raccrochage (35) afin de détecter si le terminal d'utilisateur a été raccroché, et à activer le module de notification d'appel (33) afin d'initier la notification d'appel externe vers le terminal d'utilisateur lorsqu'il est déterminé que le terminal d'utilisateur a été raccroché ; et
le module de décision de notification (32) est en outre configuré, lorsque le module d'analyse de scénario (31) détermine que le scénario est « NO ANSWER » (aucune réponse), de manière à activer le module de notification de service SMS (36) afin d'envoyer une notification de service de messages courts, SMS, au terminal d'utilisateur.

9. Système selon la revendication 8, dans lequel le module de détection d'état (34) est en outre configuré de manière à :
envoyer un message court de détection au terminal d'utilisateur ; et
déterminer que le terminal d'utilisateur a été mis sous tension ou qu'il est revenu au sein de la zone de service lorsqu'un rapport de réussite d'envoi du message court de détection est reçu à partir d'un centre de service de messages courts.

10. Système selon la revendication 8, dans lequel :
le module de décision de notification (32) est en outre configuré de manière à acquérir une quantité de messages vocaux non lus dans la boîte vocale du terminal d'utilisateur, et à activer le module de notification de service SMS (36) afin qu'il envoie la notification de service SMS au terminal d'utilisateur lorsqu'il est déterminé que la quantité de messages vocaux non lus est supérieure ou égale à une valeur de seuil prédéfinie, et/ou lorsqu'il est déterminé qu'il existe un message urgent important dans la boîte vocale du terminal d'utilisateur ; et
le module de décision de notification (32) est en outre configuré, lorsqu'un récépissé de réussite d'envoi de la notification de service SMS est reçu, de manière à activer le module de notification d'appel (33) afin qu'il initie la notification d'appel externe vers le terminal d'utilisateur.

11. Système selon la revendication 8, dans lequel :
le module de décision de notification (32) est en outre configuré, lorsque le module d'analyse de scénario (31) détermine que le scénario est « POWER-OFF » (hors tension) ou « NOT IN SERVICE AREA » (hors de la zone de service), lorsque le module de détection d'état (34) détecte que le terminal d'utilisateur n'est pas sous tension ou ne revient pas dans la zone de service, et lorsque la notification d'appel externe initiée vers le terminal d'utilisateur en vertu de l'activation du module de notification d'appel (33) est infructueuse, de manière à activer le module de notification de service SMS (36) afin qu'il envoie la notification de service SMS au terminal d'utilisateur.

12. Système selon la revendication 8, dans lequel :
le module de décision de notification (32) est en outre configuré, lorsque le module d'analyse de scénario (31) détermine que le scénario est « POWER-OFF » (hors tension) ou « NOT IN SERVICE AREA » (hors de la zone de service), lorsque le module de détection d'état (34) détecte que le terminal d'utilisateur a été mis sous tension ou qu'il est revenu au sein de la zone de service, et lorsque la notification d'appel externe initiée vers le terminal d'utilisateur en vertu de l'activation du module de notification d'appel (33) est infructueuse, de manière à activer le module de notification de service SMS (36) afin qu'il envoie la notification de service SMS au terminal d'utilisateur.

13. Système selon la revendication 8, dans lequel :
le module de décision de notification (32) est en outre configuré, lorsque le module d'analyse de scénario (31) détermine que le scénario est « BUSY » (occupé), lorsque le module de détection d'état (34) détecte que le terminal d'utilisateur est raccroché et lorsque la notification d'appel externe initiée vers le terminal d'utilisateur en vertu de l'activation du module de notification d'appel (33) est infructueuse, de manière à activer le module de notification de service SMS (36) afin qu'il envoie la notification de service SMS au terminal d'utilisateur.

14. Système selon l'une quelconque des revendications 8 à 13, dans lequel le module d'analyse de scénario (31) est en outre configuré de manière à : déterminer le scénario d'activation de la boîte vocale du terminal d'utilisateur selon une valeur de cause d'acheminement d'appel pour activer la boîte vocale du terminal d'utilisateur.

15. Support de stockage informatique stockant des instructions exécutables par ordinateur configurées de manière à exécuter le procédé de notification de boîte vocale selon l'une quelconque des revendications 1 à 7.
